# EUROPÄISCHE PATENTSCHRIFT

(11) **EP 1 598 585 B1**
(45) Veröffentlichungstag und Bekanntmachung des Hinweises auf die Patenterteilung: **01.08.2012**
(21) Anmeldenummer: 05000790.5
(22) Anmeldetag: 17.01.2005
(51) Int. Cl.: F16L 23/036

(54) **Lösbare Verbindungsanordnung für zwei rotationssymmetrische Bauteile**
Releasable connecting system for two elements with rotational symmetry
Dispositif de connexion amovible de deux pièces symétriques de révolution

(30) Priorität: 17.03.2004 DE 102004013332
(43) Veröffentlichungstag der Anmeldung: 23.11.2005
(73) Patentinhaber: Holter Regelarmaturen GmbH & Co. KG, 33758 Schloß Holte-Stukenbrock (DE)
(72) Erfinder: Müller, Andreas, Dipl.-Ing., 32839 Steinheim (DE); Wangemann, Matthias, Dipl.-Ing., 33758 Schloss Holte-Strukenbrock (DE)
(74) Vertreter: Philipp, Matthias

(56) Entgegenhaltungen:
- DE-A1- 1 525 916
- DE-A1- 1 750 069
- DE-A1- 2 306 030
- DE-B- 1 475 703
- FR-A- 1 119 075
- FR-A- 1 474 846
- GB-A- 2 256 664
- US-A- 2 821 325
- US-A- 2 937 782
- US-A- 4 124 233
- US-A- 4 565 297
- US-A- 5 247 996
- US-A1- 2002 170 721

## Beschreibung

Die Erfindung bezieht sich auf eine lösbare, kraft- und formschlüssige Verbindungsanordnung für zwei an einer Verbindungsstelle rotationssymmetrische Bauteile, insbesondere zur dichtenden Verbindung von Verschlußteilen an Kraftwerksarmaturen, mit einem ersten Bauteil, das einen radial nach außen vorspringenden Bund mit einer ersten Spannfläche und einer ersten Anlagefläche aufweist, einer an einem offenen Ende eines zweiten Bauteils angeordneten Hülse für eine axial übergreifende Aufnahme des Bundes, einer in der Hülse zum Zusammenwirken mit der ersten Anlagefläche ausgebildeten zweiten Anlagefläche, einer entweder in der ersten oder in der zweiten Anlagefläche ausgebildete Nut zur Aufnahme einer Dichtung, einer in der Hülse mit axialem Abstand zu der zweiten Anlagefläche ausgebildeten zweiten Spannfläche, und mit einer Anzahl von ringkeilförmigen Spannelementen, die über den Umfang verteilt und mit ersten Keilflächen gegen die erste Spannfläche und mit zweiten Keilflächen gegen die zweite Spannfläche anliegend angeordnet sind. Eine derartige Verbindungsanordnung ist beispielsweise aus dem deutschen Gebrauchsmuster DE 298 22 922 U1 bekannt.

Bei der bekannten Verbindungsanordnung wird jedes Spannelement unmittelbar mit einer Spannschraube beaufschlagt, die zwischen den Spannelementen und einer Schulter des ersten Bauteils wirkt und das Spannelement keilartig entlang der Keilflächen zwischen den Bauteilen verspannt.

Eine solche Verbindungsanordnung ist zwar im Sinne des Kraftflusses günstig, weist allerdings noch den Nachteil auf, daß zum Ein- oder Ausbau zahlreiche Spannschrauben gleichmäßig anzuziehen sind, wofür relativ viel Zeit benötigt wird. Ungleichmäßige Anzugsmomente können zu Schäden im Betrieb führen. Außerdem ist die Herstellung der zahlreichen erforderlichen Widerlager für die Spannschrauben aufwendig.

Das Dokument DE 1750069 offenbart eine Verbindungsanordnung gemäß dem Oberbegriff des Anspruchs 1.

Die Erfindung hat sich zur Aufgabe gestellt, eine gattungsgemäße Verbindungsanordnung insbesondere im Hinblick auf die vorstehend beschriebenen Nachteile zu verbessern.

Die Erfindung löst diese Aufgabe durch eine gattungsgemäße Verbindungsanordnung, die die Merkmale des Anspruchs 1 aufweist.

Durch die erfindungsgemäße Anordnung eines die Spannkräfte der Spannmittel über den Umfang verteilenden Spreizrings können weniger oder andere Spannmittel vorgesehen sein, als dies beim Stand der Technik der Fall ist, so daß die Montage oder Demontage einfacher und schneller vonstatten gehen kann. Außerdem kann der Kraftfluß noch weiter verbessert werden.

Bevorzugt ist vorgesehen, daß die erste und die zweite Anlagefläche radial verlaufen. Die Nut kann in einem radialen Teilbereich der ersten oder zweiten Anlagefläche zur Anordnung der Dichtung im Kraftnebenfluß ausgebildet sein.

Bevorzugt ist vorgesehen, daß die erste Spannfläche mit der zweiten Spannfläche einen Keilwinkel einschließt, der mit einem Konuswinkel der äußeren Spreizfläche so abgestimmt ist, daß der Spreizring eine selbsthemmende Verspannung der Bauteile bewirkt.

Es kann vorgesehen sein, daß die erste Spannfläche radial und die zweite Spannfläche konusförmig verläuft.

Alternativ kann vorgesehen sein, daß die erste Spannfläche konusförmig und die zweite Spannfläche radial verläuft.

In einer weiteren Alternative kann vorgesehen sein, daß die erste und die zweite Spannfläche konusförmig verlaufen.

Der Spreizring kann in Umfangsrichtung ununterbrochen ausgebildet sein, oder aber es kann vorgesehen sein, daß der Spreizring in Umfangsrichtung verteilt angeordnete radiale Dehnungsschlitze und eine konusförmig ausgebildete innere Spreizfläche aufweist, mit der er gegen eine auf dem zweiten Bauteil angeordnete, entsprechend konusförmig ausgebildete dritte Spreizfläche anliegt und durch axiale Verlagerung radial aufspreizbar ist. Hierbei kann vorgesehen sein, daß die äußere Spreizfläche und die dritten Keilflächen der Spannelemente jeweils entweder axialzylindrisch oder konusförmig ausgebildet sind.

Es kann vorgesehen sein, daß die Dehnungsschlitze nicht über eine gesamte axiale Länge des Spreizrings verlaufen. Alternativ sieht die Erfindung vor, daß der Spreizring nach Art einer Spannzange mit in Umfangsrichtung alternierend angeordneten Dehnungsschlitzen versehen ist.

Der Spreizring kann aus über den Umfang verteilt angeordneten, separaten Spreizelementen und einem diese übergreifenden Druckring gebildet sein.

Gemäß der Erfindung ist vorgesehen, daß auf dem ersten Bauteil, insbesondere auf dem Bund, benachbart zu der ersten Spannfläche ein Sicherungsring lösbar gehalten ist, der mit einer im wesentlichen axialzylindrisch verlaufenden Sicherungsfläche gegen eine im wesentlichen axialzylindrisch verlaufende Haltefläche der Spannelemente anliegt und ein vollständiges Lösen der Spannelemente und damit der Verbindungsanordnung bei gelöstem Spreizring verhindert.

Die Spannmittel können als über den Umfang verteilt angeordnete Spannschrauben ausgebildet sein. Hierbei können die Spannschrauben in einem Spannring sitzen, der axial an dem ersten Bauteil gesichert ist, insbesondere mittels einer Umfangsnut und eines Nutsteins.

Alternativ kann vorgesehen sein, daß die Spannschrauben durch den Spreizring in das erste Bauteil greifen, insbesondere in den Bund.

Als weitere Alternative kann vorgesehen sein, daß der Spreizring einen einteilig damit ausgebildeten oder auf diesem aufliegenden Flanschring aufweist, durch den die Spannschrauben in einen radial außerhalb der Spannelemente gelegenen Umfangsbereich des zweiten Bauteils greifen.

Schließlich kann als Alternative vorgesehen sein, daß die Spannmittel durch eine auf den Spreizring wirkende Gewindemutter gebildet sind, die mit einem Außen- oder Innengewinde des ersten oder zweiten Bauteils zusammenwirkt.

In einer bevorzugten Ausführungsform der Erfindung ist vorgesehen, daß die Spannelemente aus Teilen eines entlang zweier paralleler Sekantenebenen geteilten Rings bestehen, die in an sich bekannter Weise mit im Vergleich zu durch Radialschnitte erhaltenen Teilen in vorteilhaft geringem gegenseitigem (Umfangs-)Abstand montierbar, d.h. zwischen erstem und zweitem Bauteil einsetzbar sind.

Die Erfindung wird nachfolgend erläutert, wobei auf eine Zeichnung Bezug genommen ist, in der
Fig. 1 eine Längsschnittansicht eines Deckelverschlusses einer Kraftwerksarmatur mit einer Verbindungsanordnung zeigt,
Fig. 2 bis 5 und 7 bis 9 weitere Varianten der in Fig. 1 dargestellten Verbindungsanordnung zeigen,
Fig. 6 eine erfindungsgemäße Verbindungsanordnung zeigt, und
Fig. 10 und 10a eine Draufsicht und eine Schnittansicht eines Spreizrings zeigen.

An hochbeanspruchten Kraftwerksarmaturen für neue konventionelle Wärmekraftwerke auf Basis fossiler Brennstoffe erreichen die Betriebsdrücke bis zu ca. 300 bar, während die Betriebstemperaturen Werte bis über 700 °C erreichen. Die Standzeiten von selbstdichtenden Graphit-Deckeldichtungen im Hinblick auf die extremen Medientemperaturen und Drücke sind nicht ausreichend. Eine Graphitdichtung oxidiert bei Überschreitung einer Betriebstemperatur von 500 °C unter Zutritt von Luftsauerstoff relativ schnell zu CO₂.

Bei derartigen Betriebstemperaturen kommt unter anderem eine radial wirkende, hochtemperaturbeständige Metall-O-Ring-Dichtung in Betracht. Konstruktiv muß der Deckelverschluß mit einer Metall-O-Ring-Dichtung so ausgeführt sein, daß der Metall-O-Ring im Kraftnebenschluß liegt. Mit konventionellen Flanschabschlüssen oder selbstdichtenden Verschlüssen ist diese Ausdichtung nur bedingt machbar oder führt zu überproportionalen Abmessungen von Gehäuse und Verschlußelement, die nicht brauchbar sind.

Die erfindungsgemäße Konstruktion ermöglicht es, einen Deckelverschluß für Armaturen in günstiger Weise so auszuführen, daß eine Metall-O-Ring-Dichtung im Kraftnebenschluß liegt und die auftretenden Druckkräfte durch ein doppelt wirkendes rotationssymmetrisches Konussystem aufgenommen werden. Erfindungsgemäß werden die Betriebskräfte durch im Formschluß liegende, mehrfach mit konischen Mantelflächen versehene Ringsegmente abgefangen, die sich außen zum Gehäuse und innen an einem Spreizring mittels Kegelmantelflächen abstützen. Durch die Wahl der Kegelwinkel im Bereich der Selbsthemmung, d.h. der Tangens des Gleitwinkels ist kleiner als die zu erwartende geringste Haftreibungszahl, wird gewährleistet, daß die axialen Rückwirkungskräfte auf die Vorspannelemente (Spannmittel in Form von Schrauben) gering oder gleich null sind.

Da aufgrund der vorteilhaften konstruktiven Ausbildung nur geringe und betriebsdruckunabhängige Vorspannkräfte erforderlich sind, treten Relaxation und Materialermüdung der Spannmittel nicht auf, und die Abmessungen bleiben im Verhältnis zu der Größe der übertragbaren Kräfte gegenüber üblichen Flanschverschlüssen relativ klein. Der günstige Kraftfluß durch die mit dem doppelt wirkenden rotationssymmetrischen Konussystem verbundenen Bauteile erzeugt geringsmögliche Stülp- und Biegemomente sowie Verformungen in Gehäuse und Deckel. In den äußeren konussegmentartigen Spannelementen treten überwiegend Scherspannungen auf, im Spreizring bzw. Stützkonus hauptsächlich Tangentialspannungen bzw. bei einem innen gestützten, geschlitzen Spreizring nur Druckspannungen, die sich leicht beherrschen lassen.

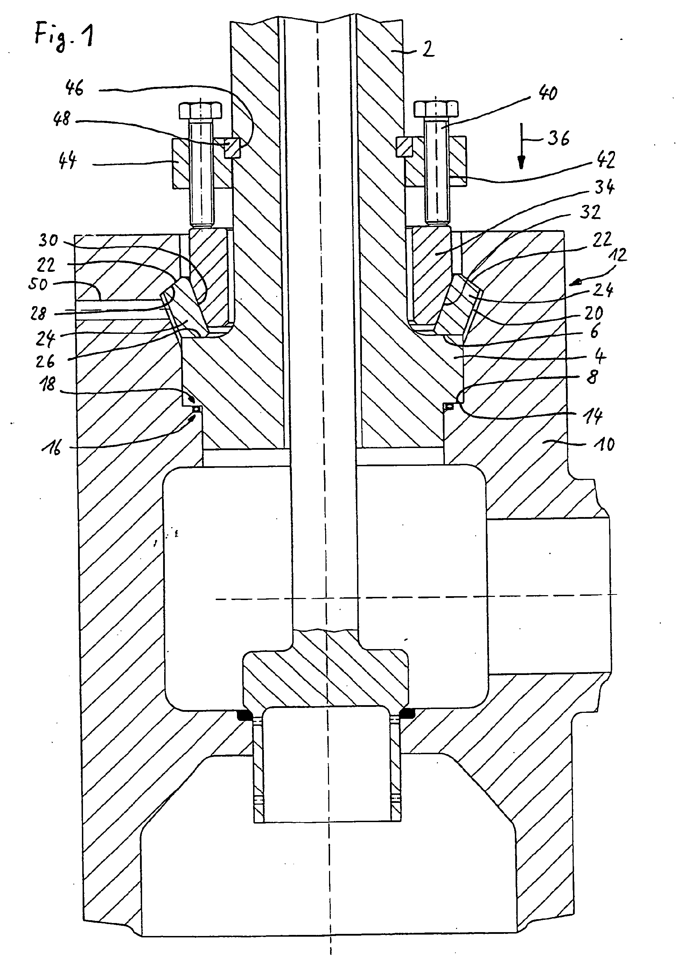

Fig. 1 zeigt eine erste Variante einer Verbindungsanordnung, bei der ein erstes, zumindest an der Verbindungsstelle rotationssymmetrisches Bauteil, in diesem Fall ein Deckel 2 einer Kraftwerksarmatur, einen radial nach außen vorspringenden Bund 4 aufweist, auf dem eine erste, radial verlaufende Spannfläche 6 und eine erste, ebenfalls radial verlaufende Anlagefläche 8 ausgebildet sind.

Ein zweites Bauteil 10, in diesem Falle ein Gehäuse einer Kraftwerksarmatur, das im Bereich der in Fig. 1 oben dargestellten Verbindungsstelle ebenfalls rotationssymmetrisch ausgebildet ist, weist an einem offenen Ende eine Hülse 12 auf, die den Bund 4 des ersten Bauteils 2 axial übergreift. In der Hülse 12 ist zum Zusammenwirken mit der ersten Anlagefläche 8 des ersten Bauteils 2 eine zweite, ebenfalls radial verlaufende Anlagefläche 14 ausgebildet, wobei in einem radial innenliegenden Bereich der zweiten Anlagefläche 14 eine Nut 16 zur Aufnahme einer Metall-O-Ring-Dichtung 18 ausgebildet ist. Die Dichtung 18 liegt somit bei Anlage der beiden Bauteile 2, 10 im Kraftnebenschluß.

In der Hülse 12 ist mit axialem Abstand zu der zweiten Auflagefläche 14 eine Ausdrehung 20 und eine zweite konusförmige Spannfläche 22 ausgebildet, die im dargestellten zusammengesetzten Zustand der Bauteile 2, 10 der ersten Spannfläche 6 des ersten Bauteils 2 gegenüberliegt.

Eine Anzahl von ringkeilförmigen Spannelementen 24 sind über den Umfang verteilt und mit einer ersten Kegelmantel- oder Keilfläche 26 gegen die erste Spannfläche 6 und mit einer zweiten Keilfläche 28 gegen die zweite Spannfläche 22 anliegend angeordnet.

Ein gegen dritte Keilflächen 30 der Spannelemente 24 mit einer äußeren Spreizfläche 32 anliegender Spreizring 34 ist in axialer Richtung 36 gegen die Spannelemente 24 angelegt. Zwischen dem Spreizring 34 und dem ersten Bauteil 2 (Deckel) sind Spannmittel vorgesehen, um den Spreizring 34 in axialer Richtung 36 und dadurch die Spannelemente 24 entlang der zweiten Spannfläche 22 zu bewegen, d.h. bei der Ausführungsform nach Fig. 1 sowohl in Axialrichtung 36 als auch radial auswärts. Die Spannmittel sind bei der Ausführungsform nach Fig. 1 durch Spannschrauben 40 gebildet, die in Gewindebohrungen 42 eines Spannrings 44 eingedreht sind, der seinerseits gegen einen in einer Umfangsnut 46 des ersten Bauteils 2 eingelegten Nutstein 48 abgestützt ist. Aufgrund der relativ geringen Axialkräfte, die durch die Spannschrauben 40 aufzubringen sind, müssen weder die Umfangsnut 46 noch der Nutstein 48 erhebliche Abmessungen aufweisen, im Gegensatz zu einer herkömmlichen flanschartigen Verbindung, bei der die Spannschrauben die gesamte im Betrieb auftretende Druckkraft (Betriebsdruck multipliziert mit innerer Deckelfläche) aufnehmen müssen. Wenn die durch die Keilflächen 26, 28, 30 festgelegten Keil- bzw. Kegelwinkel so gewählt sind, daß Selbsthemmung eintritt, müssen die Spannschrauben 40 lediglich eine beim Montieren erforderliche Spannkraft aufbringen, während im Betrieb unabhängig vom Innen- bzw. Betriebsdruck keine darüber hinausgehende Beanspruchung eintritt. Da die Druckkräfte zwischen Deckel und Gehäuse (erstes und zweites Bauteil) durch Druck- und Reibkräfte übertragen werden, besteht die eigentliche Aufgabe der Spannschrauben 40 nur in der Fixierung der im Kraft- und Formschluß liegenden Verbindungsanordnung (erstes Bauteil 2, zweites Bauteil 10, Spannelemente 24 und Spreizring 34), d.h. darin, ein Lösen des Spreizrings 34 aufgrund von im Betrieb unvermeidlichen Vibrationen, Stößen o.ä. zu vermeiden.

Auf Höhe der Spannelemente 24 sind im zweiten Bauteil 10 im Bereich der Ausdrehung 20 Durchgangsbohrungen 50 eingebracht, um die Spannelemente 24 im Falle eines Demontage herausstoßen zu können. Der Spreizring 34 kann mittels nicht dargestellter, axialer Abdrückgewindebohrungen und entsprechender Abdrückschrauben aus dem aus den Spannelementen 24 gebildeten konischen Innenring gedrückt werden. Dadurch ist eine problemlose Demontage der Verbindungsanordnung sichergestellt.

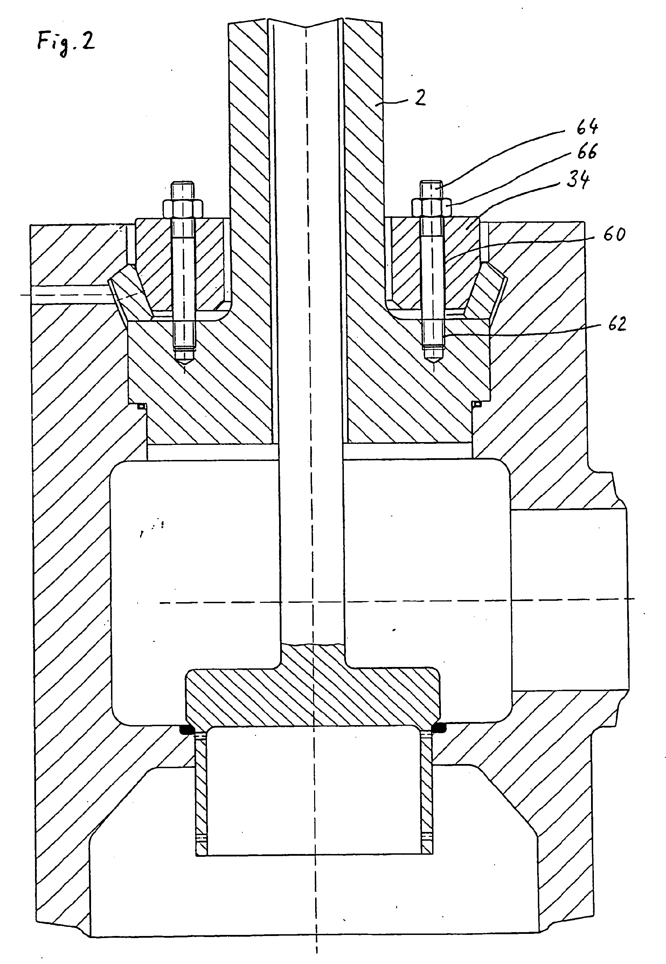

Die weiteren, in Fig. 2 bis 5 und 7 bis 9 dargestellten Varianten unterscheiden sich von der vorstehend erläuterten Variante im wesentlichen lediglich hinsichtlich der Ausführung des Spreizrings 34 und dessen Verspannung mit unterschiedlichen Spannmitteln.

Fig. 2 zeigt einen Spreizring 34 mit axialen Durchgangsbohrungen 60, durch die in Gewindesacklöcher 62 des ersten Bauteils 2 eingeschraubte Stehbolzen 64 greifen, wobei die axiale Verspannung des Spreizrings 34 durch Befestigungsmuttern 66 erfolgt. Aufgrund der geschlossenen Ausbildung des Spreizrings 34 werden die Stehbolzen 64 lediglich axial und nicht auf Biegung beansprucht.

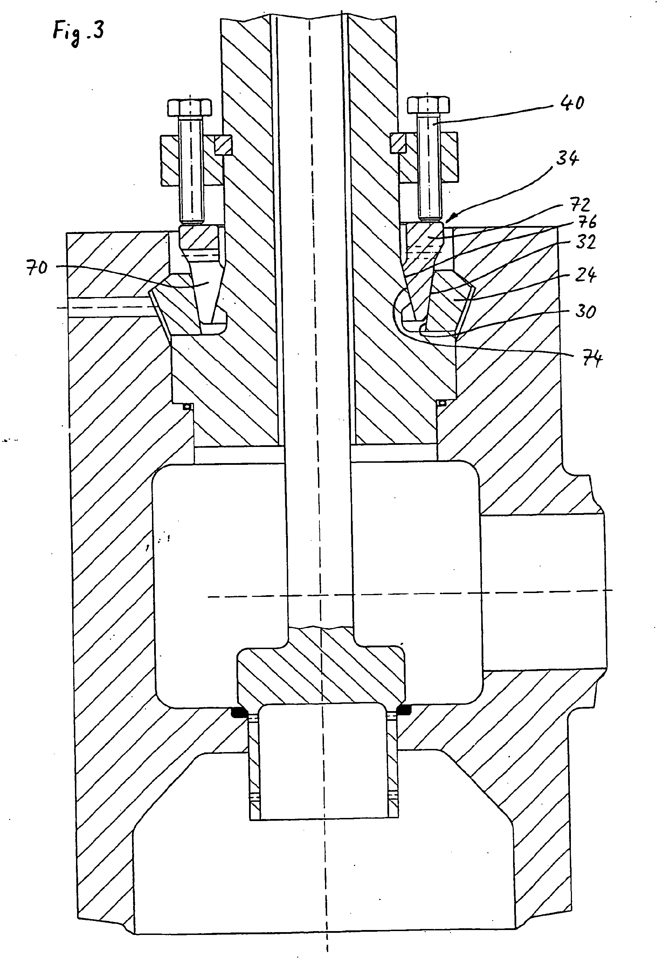

Fig. 3 zeigt eine Variante, bei der der Spreizring 34 in Umfangsrichtung nicht ununterbrochen bzw. massiv ausgebildet ist, sondern in Umfangsrichtung verteilt angeordnete, in Radialrichtung verlaufende Dehnungsschlitze aufweist, von denen einer in Fig. 3 mit 70 bezeichnet ist. Es können lediglich in einer axialen Richtung, z. B. von der Unterseite her eingebrachte Dehnungsschlitze vorhanden sein, von denen sich jeder entsprechend dem in Fig. 3 mit 70 bezeichneten Dehnungsschlitz erstreckt, oder aber der Spreizring 34 kann spannzangenartig ausgebildet sein, wobei sich in Umfangsrichtung aufeinanderfolgende Dehnungsschlitze aus abwechselnd entgegengesetzten axialen Richtungen in den Spreizring hinein erstrecken.

In einer alternativen Variante, die nicht dargestellt ist, wäre es auch möglich, daß der Spreizring aus über den Umfang verteilt angeordneten, separaten Spreizelementen zusammengesetzt ist.

In jedem Falle ist es zweckmäßig, wenn der Spreizring mit einem die einzelnen Spreizelemente oder die durch Dehnungsschlitze unterteilten Spreizbereiche übergreifenden Druckring ausgebildet ist, der in Fig. 3 mit 72 bezeichnet ist. Der Druckring kann einteilig mit durch Dehnungsschlitze getrennten Spreizbereichen oder aber als getrenntes Bauteil ausgebildet sein.

Allen derartigen Varianten gemäß Fig. 3 ist gemeinsam, daß der Spreizring 34 nicht nur eine äußere Spreizfläche 32 aufweist, sondern zusätzlich eine innere, konusförmige Spreizfläche 74, die mit einer auf dem zweiten Bauteil 2 befindlichen, entsprechend konusförmig ausgebildeten dritten Spreizfläche 76 zusammenwirkt. Beim Anziehen der Spannmittel (Spannschrauben 40) bewegt sich somit der Druckring 72 in axialer Richtung 36 relativ zu dem ersten Bauteil 2 in Richtung auf den Bund 4, während sich der geschlitzte Bereich des Spreizrings 34 mit den inneren Spreizflächen 74 entlang der dritten Spreizfläche 76 sowohl in axialer Richtung 36 als auch in radialer Richtung auswärts bewegt, d. h. aufspreizt.

Aufgrund der vorgenannten radialen Aufspreizbewegung des geschlitzten Bereichs des Spreizrings 34 könnten die in Fig. 3 konusförmig dargestellten dritten Keilflächen 30 der Spannelemente 24 und dementsprechend auch die äußere Spreizfläche 32 des Spreizrings 34 axialzylindrisch ausgebildet sein, wodurch die Herstellung vereinfacht wird.

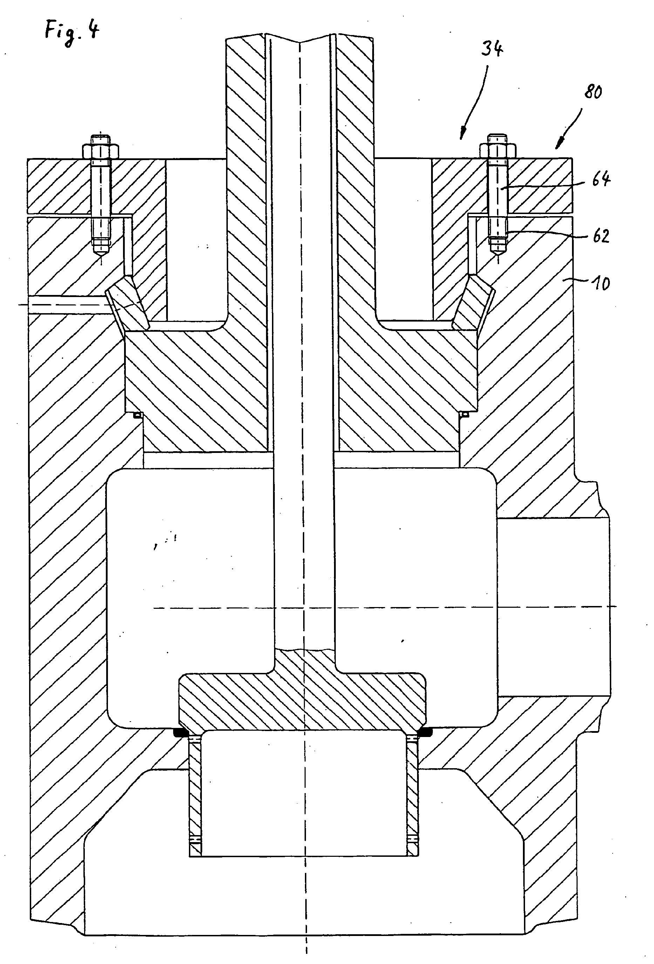

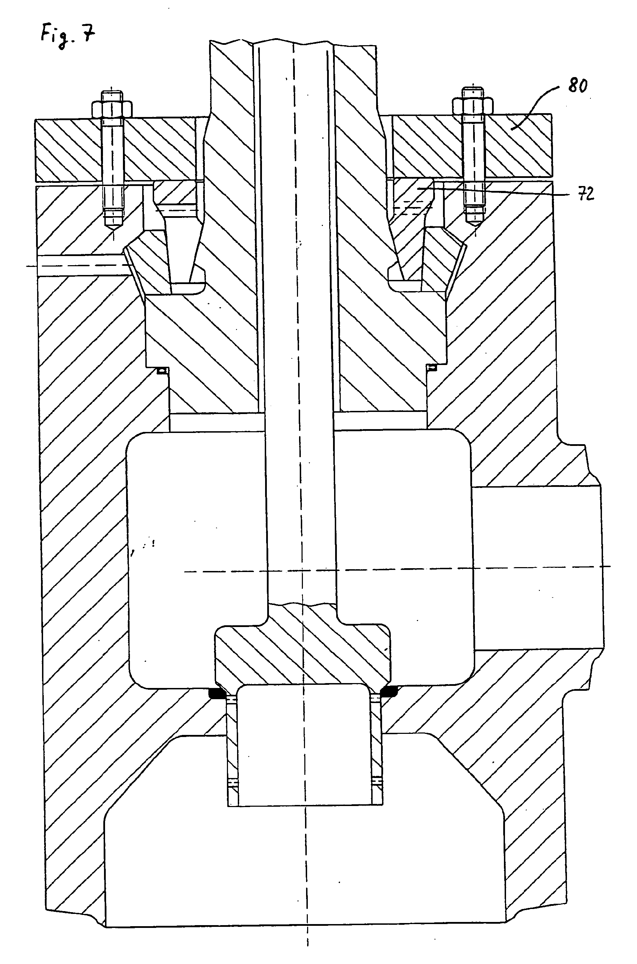

Fig. 4 zeigt eine Abwandlung der Variante nach Fig. 1 und 2, bei der der Spreizring 34 einen einteilig damit ausgebildeten Flanschabschnitt oder Flanschring 80 aufweist, durch den Stehbolzen 64 greifen, die ihrerseits in Gewindesacklöchern 62 in dem zweiten Bauteil 10 verankert sind. Alternativ zu der dargestellten einteiligen Ausführung könnte der Flanschring 80 als ein den eigentlichen Spreizring 34 übergreifender, separater Ring ausgebildet sein, wie weiter unten im Zusammenhang mit Fig. 7 noch erläutert wird.

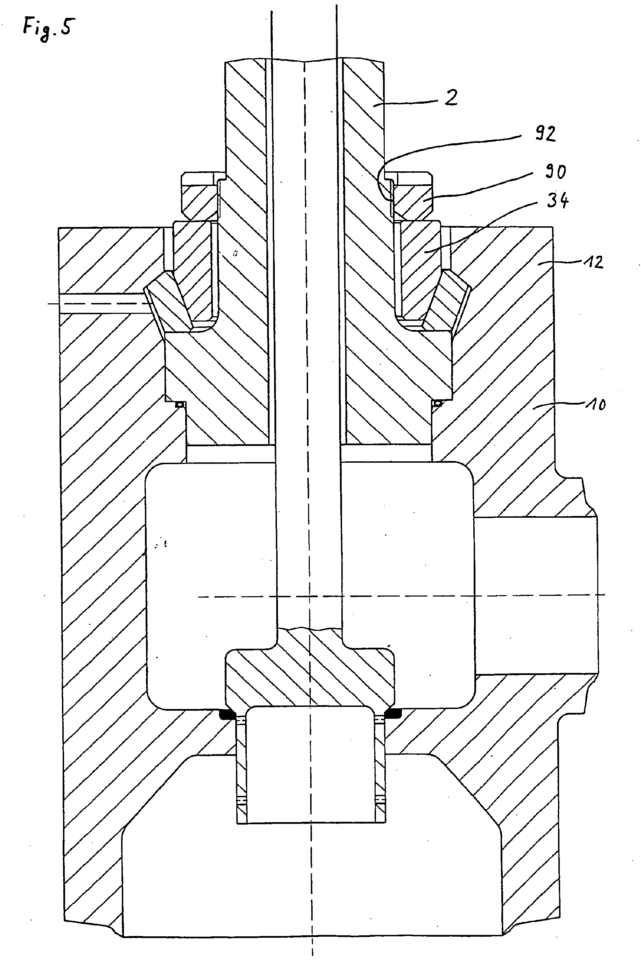

Fig. 5 zeigt eine Variante, bei der die Spannmittel durch eine auf den Spreizring 34 wirkende Gewindemutter 90 gebildet sind, die mit einem Außengewinde 92 des ersten Bauteils 2 zusammenwirkt. Alternativ könnte die Gewindemutter 90 mit einem Außengewinde und das zweite Bauteil 10 in einem offenen Endbereich der Hülse 12 benachbart zu der zweiten Spannfläche 22 mit einem Innengewinde versehen sein, bei entsprechender axialer Kürzung des Spreizrings 34 oder axialer Verlängerung des zweiten Bauteils 10.

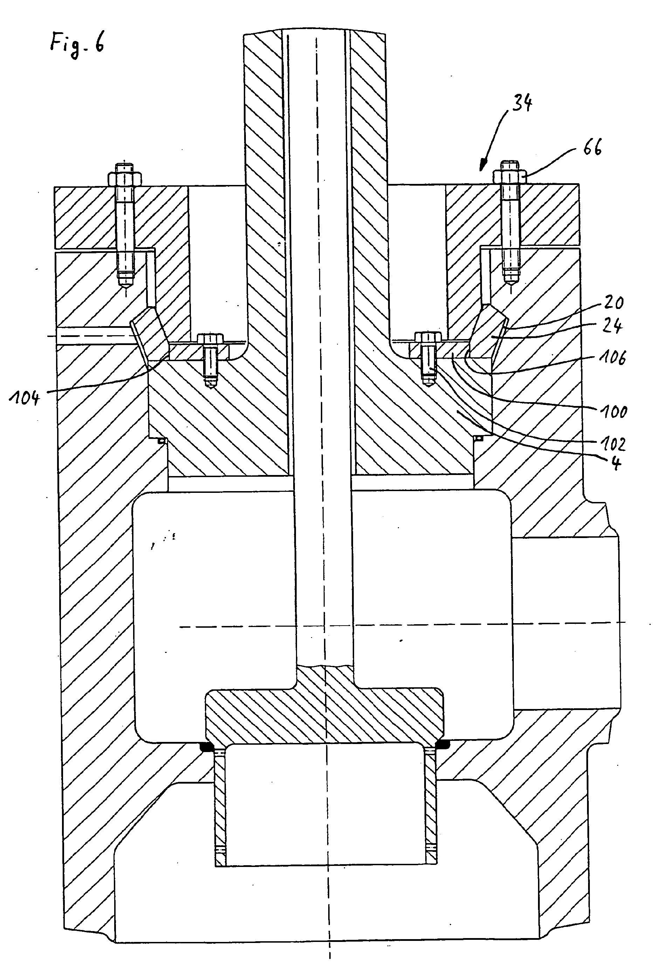

Fig. 6 zeigt eine erfindungsgemäße Verbindungsanordnung, bei der der Spreizring 34 entsprechend Fig. 4 ausgebildet ist, wobei allerdings zusätzlich ein Sicherungsring 100 mittels Befestigungsschrauben 102 an dem Bund 4 des ersten Bauteils 2 befestigt ist. Der Sicherungsring 100 weist eine axialzylindrisch verlaufende Sicherungsfläche 104 auf, mit der er gegen entsprechend ausgebildete, axialzylindrisch verlaufende Halteflächen 106 der Spannelemente 24 anliegt. Der Durchmesser der Sicherungsfläche 104 ist hierbei so gewählt, daß der Sicherungsring 100 im unverspannt zusammengesetzten Zustand der Verbindungsanordnung eingesetzt werden kann, ohne bereits die Spannelemente 24 zu verspannen, aber gleichzeitig so, daß die Spannelemente 24 bei eingesetztem Sicherungsring 100 nicht aus der Ausdrehung 20 herausgleiten können. Mit anderen Worten tritt beim Anziehen der Befestigungsmuttern 66 ein in Fig. 6 nicht dargestellter radialer Spalt zwischen der Sicherungsfläche 104 und den Halteflächen 106 auf, da die Spannelemente 24 radial auswärts verspannt werden. Sollte sich die Befestigung im Betrieb aus irgendwelchen Gründen lösen, kann es dennoch nicht zu einem Herausdrücken des Dekkels 2 aus der Hülse 12 kommen, sondern lediglich zu einem mehr oder weniger geringfügigen Undichtwerden der Verbindungsstelle im Bereich der Dichtung 18, da die Spannelemente 24 nach wie vor eine erhebliche axiale Bewegung der Bauteile 2, 10 relativ zueinander verhindern.

Fig. 7 zeigt eine Kombination der Varianten nach Fig. 3 und Fig. 4, wobei ein Flanschring 80 als separates Teil ausgebildet ist und in gewisser Weise gleichzeitig die Funktion eines Druckrings übernehmen könnte, wobei diese allerdings, ähnlich wie in Fig. 7, bereits durch den Druckring 72 als Teil des Spreizrings 34 wahrgenommen wird.

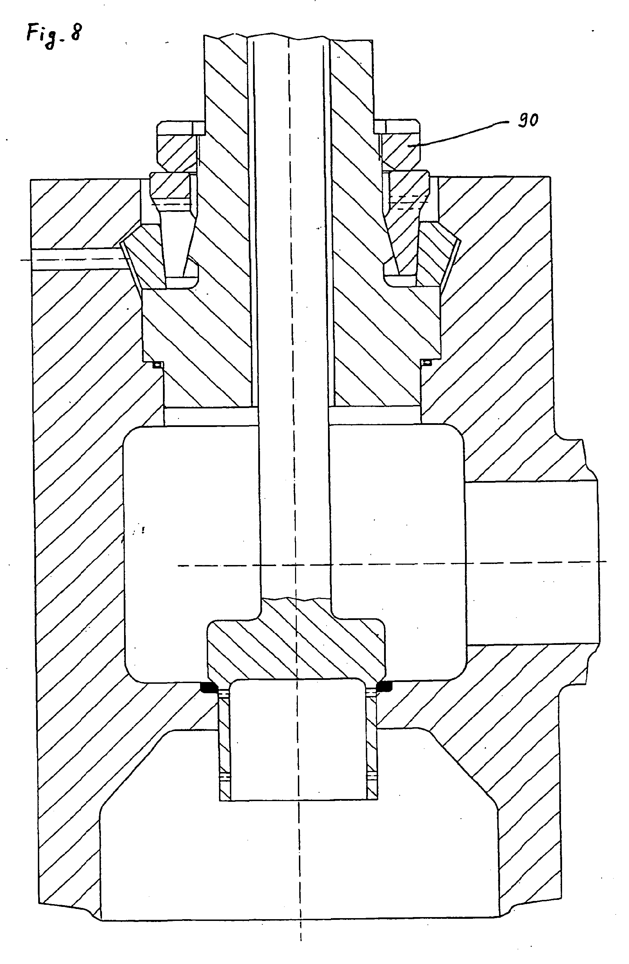

Fig. 8 zeigt eine Kombination aus Fig. 3 und 5, bei der anders als in Fig. 3 die Spannmittel durch eine Gewindemutter 90 gebildet sind.

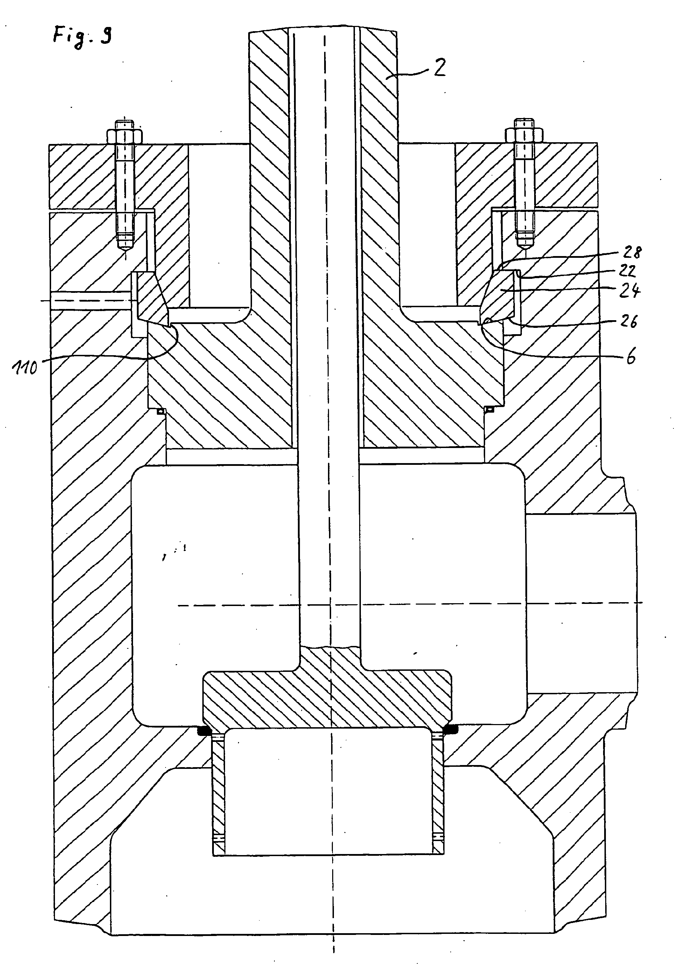

Fig. 9 zeigt eine Variante, bei der die Spannelemente 24 nicht wie bisher (jeweils) eine erste, radiale Keilfläche 26 und eine zweite, konusförmige Keilfläche 28 aufweisen, sondern eine erste, konusförmige Keilfläche 26 und eine zweite, radiale Keilfläche 28. Die erste Spannfläche 6 des ersten Bauteils 2 entspricht selbstverständlich der zweiten, konusförmigen Keilfläche 28 und ist somit ebenfalls konusförmig ausgebildet.

Fig. 9 zeigt ferner, daß, bei einer nicht zur Erfindung gehörenden Variante, der anhand Fig. 6 erläuterte Sicherungsring 100 durch eine radiale Anlageschulter 110 in der ersten Spannfläche 6 ersetzt werden kann, wobei sich hierbei die Ausbildung der Keilflächen gemäß Fig. 9 besonders gut eignet. Grundsätzlich könnte aber auch bei einer radial verlaufenden ersten Spannfläche entsprechend Fig. 1 bis 8 eine radiale Anlageschulter vorgesehen sein, um die Funktion einer Sicherung gegen vollständiges Lösen zu erzielen.

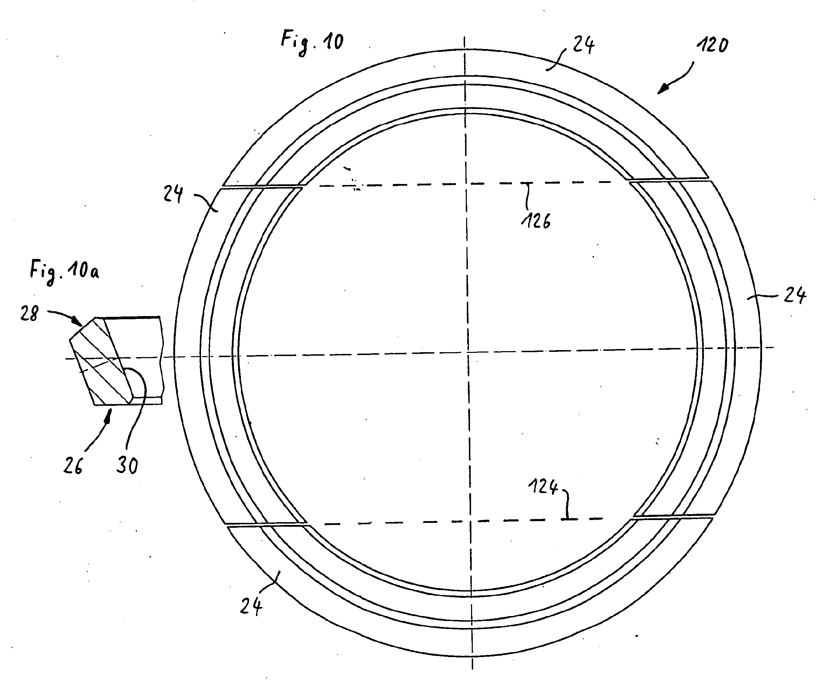

Fig. 10 zeigt einen Spannelementesatz 120, der aus vier Spannelementen 24 besteht, die durch Aufteilung eines rotationssymmetrischen Rings mit Querschnitt gemäß Fig. 10a entlang zwei paralleler Sekantenschnitte 124, 126 gebildet sind. Jedes einzelne Spannelement 24 weist, ähnlich wie in Fig. 1 dargestellt, eine erste radiale Keilfläche 26 auf, die auch nach außen konusförmig ausgebildet sein könnte (Fig. 9), eine zweite, nach außen konusförmige Keilfläche 28, die auch radial ausgebildet sein könnte (Fig. 9), und eine dritte, nach innen konusförmig ausgebildete Keilfläche 30, die auch axialzylindrisch ausgebildet sein könnte, wie in Zusammenhang mit Fig. 3 und 7 erläutert.

Ein wesentlicher Vorteil des Spannelementesatzes 120 besteht darin, daß der ursprüngliche Ring nicht entlang Radialebenen in Sektoren geteilt ist, sondern entlang beabstandeter, paralleler Sekantenebenen, so daß die Spannelemente mit minimalem gegenseitigem Abstand montierbar sind.

### Bezugszeichenliste

- 2: erstes Bauteil (Deckel)
- 4: Bund
- 6: erste Spannfläche
- 8: erste Anlagefläche
- 10: zweites Bauteil (Gehäuse)
- 12: Hülse
- 14: zweite Anlagefläche
- 16: Nut
- 18: Dichtung
- 20: Ausdrehung
- 22: zweite Spannfläche
- 24: Spannelement
- 26: erste Keilfläche
- 28: zweite Keilfläche
- 30: dritte Keilfläche
- 32: äußere Spreizfläche
- 34: Spreizring
- 36: axiale Richtung
- 40: Spannschraube
- 42: Gewindebohrung
- 44: Spannring
- 46: Umfangsnut
- 48: Nutstein
- 50: Durchgangsbohrung
- 60: Durchgangsbohrung (in 34)
- 62: Gewindesackloch
- 64: Stehbolzen
- 66: Befestigungsmutter
- 70: Dehnungsschlitz
- 72: Druckring
- 74: innere Spreizfläche
- 76: dritte Spreizfläche
- 80: Flanschring
- 90: Gewindemutter
- 92: Außengewinde (an 2)
- 100: Sicherungsring
- 102: Befestigungsschraube
- 104: Sicherungsfläche
- 106: Haltefläche
- 110: Anlageschulter
- 120: Spannelementesatz
- 122, 124: Sekantenschnitt (Sekantenebene)

## Patentansprüche

1. Lösbare, kraft- und formschlüssige Verbindungsanordnung für zwei an einer Verbindungsstelle rotationssymmetrische Bauteile (2, 10), insbesondere zur dichtenden Verbindung zwischen Verschlußteilen an Kraftwerksarmaturen, mit einem ersten Bauteil (2), das einen radial nach außen vorspringenden Bund (4) mit einer ersten Spannfläche (6) und einer ersten Anlagefläche (8) aufweist, mit einer an einem offenen Ende eines zweiten Bauteils (10) angeordneten Hülse (12) für eine axial übergreifende Aufnahme des Bundes (4), mit einer in der Hülse (12) zum Zusammenwirken mit der ersten Anlagefläche (8) ausgebildeten zweiten Anlagefläche (14), mit einer entweder in der ersten oder in der zweiten Anlagefläche (8, 14) ausgebildeten Nut (16) zur Aufnahme einer Dichtung (18), mit einer in der Hülse (12) mit axialem Abstand zu der zweiten Anlagefläche (14) ausgebildeten zweiten Spannfläche (22), mit einer Anzahl von ringkeilförmigen Spannelementen (24), die über den Umfang verteilt und mit ersten Keilflächen (26) gegen die erste Spannfläche (6) und mit zweiten Keilflächen (28) gegen die zweite Spannfläche (22) anliegend angeordnet sind, mit einem Spreizring (34), der mit einer äußeren Spreizfläche (32) gegen dritte Keilflächen (30) der Spannelemente (24) anliegt, sowie mit zwischen dem Spreizring (34) und einem der Bauteile (2, 10) wirkenden Spannmitteln (40), mit denen der Spreizring (34) axial und die Spannelemente (24) radial oder radial-axial bewegbar sind, **dadurch gekennzeichnet, daß** auf dem ersten Bauteil (2), insbesondere auf dem Bund (4), benachbart zu der ersten Spannfläche (6) ein Sicherungsring (100) lösbar gehalten ist, der mit einer im wesentlichen axialzylindrisch verlaufenden Sicherungsfläche (104) gegen eine im wesentlichen axialzylindrisch verlaufende Haltefläche (106) der Spannelemente (24) anliegt und ein vollständiges Lösen der Spannelemente (24) und damit der Verbindungsanordnung bei gelöstem Spreizring (34) verhindert.

2. Verbindungsanordnung nach Anspruch 1, **dadurch gekennzeichnet, daß** die erste und die zweite Anlagefläche (8, 14) radial verlaufen.

3. Verbindungsanordnung nach Anspruch 1 oder 2, **dadurch gekennzeichnet, daß** die Nut (16) in einem radialen Teilbereich der ersten oder zweiten Anlagefläche (8, 14) zur Anordnung der Dichtung (18) im Kraftnebenschluß ausgebildet ist.

4. Verbindungsanordnung nach einem der vorangehenden Ansprüche, **dadurch gekennzeichnet, daß** die erste Spannfläche (6) mit der zweiten Spannfläche (22) einen ersten Keilwinkel einschließt, der mit einem Konuswinkel der äußeren Spreizfläche (32) so abgestimmt ist, daß der Spreizring (34) eine selbsthemmende Verspannung der Bauteile (2, 10) bewirkt.

5. Verbindungsanordnung nach einem der vorangehenden Ansprüche, **dadurch gekennzeichnet, daß** die erste Spannfläche (6) radial und die zweite Spannfläche (22) konusförmig verläuft.

6. Verbindungsanordnung nach einem der Ansprüche 1 bis 4, **dadurch gekennzeichnet, daß** die erste Spannfläche (6) konusförmig und die zweite Spannfläche (22) radial verläuft.

7. Verbindungsanordnung nach einem der Ansprüche 1 bis 4, **dadurch gekennzeichnet, daß** die erste und die zweite Spannfläche (6, 22) konusförmig verlaufen.

8. Verbindungsanordnung nach einem der vorangehenden Ansprüche, **dadurch gekennzeichnet, daß** der Spreizring (34) in Umfangsrichtung ununterbrochen ausgebildet ist.

9. Verbindungsanordnung nach einem der Ansprüche 1 bis 7, **dadurch gekennzeichnet, daß** der Spreizring (34) in Umfangsrichtung verteilt angeordnete radiale Dehnungsschlitze (70) und eine konusförmig ausgebildete innere Spreizfläche (74) aufweist, mit der er gegen eine auf dem ersten Bauteil (2) angeordnete, entsprechend konusförmig ausgebildete dritte Spreizfläche (76) anliegt und durch axiale Verlagerung radial aufspreizbar ist.

10. Verbindungsanordnung nach Anspruch 9, **dadurch gekennzeichnet, daß** die äußere Spreizfläche (32) und die dritten Keilflächen (30) der Spannelemente (34) jeweils entweder axialzylindrisch oder konusförmig ausgebildet sind.

11. Verbindungsanordnung nach Anspruch 9 oder 10, **dadurch gekennzeichnet, daß** die Dehnungsschlitze (70) nicht über eine gesamte axiale Länge des Spreizrings (34) verlaufen.

12. Verbindungsanordnung nach Anspruch 11, **dadurch gekennzeichnet, daß** der Spreizring (34) nach Art einer Spannzange mit in Umfangsrichtung alternierend angeordneten Dehnungsschlitzen (70) versehen ist.

13. Verbindungsanordnung nach einem der Ansprüche 1 bis 7, 9 oder 10, **dadurch gekennzeichnet, daß** der Spreizring (34) aus über den Umfang verteilt angeordneten, separaten Spreizelementen und einem diese übergreifenden Druckring (72) gebildet ist.

14. Verbindungsanordnung nach einem der vorangehenden Ansprüche, **dadurch gekennzeichnet, daß** die Spannmittel als über den Umfang verteilt angeordnete Spannschrauben (40) ausgebildet sind.

15. Verbindungsanordnung nach Anspruch 14, **dadurch gekennzeichnet, daß** die Spannschrauben (40) in einem Spannring (44) sitzen, der axial an dem ersten Bauteil (2) gesichert ist, insbesondere mittels einer Umfangsnut (46) und eines Nutsteins (48).

16. Verbindungsanordnung nach Anspruch 14, **dadurch gekennzeichnet, daß** die Spannschrauben (40) durch den Spreizring (34) in das erste Bauteil (2) greifen, insbesondere in den Bund (4).

17. Verbindungsanordnung nach Anspruch 14, **dadurch gekennzeichnet, daß** der Spreizring (34) einen einteilig damit ausgebildeten oder auf diesem aufliegenden Flanschring (80) aufweist, durch den die Spannschrauben (40) in das zweite Bauteil (10) greifen.

18. Verbindungsanordnung nach einem der Ansprüche 1 bis 13, **dadurch gekennzeichnet, daß** die Spannmittel durch eine auf den Spreizring (34) wirkende Gewindemutter (90) gebildet sind, die mit einem Außen- oder Innengewinde (92) des ersten oder zweiten Bauteils (2, 10) zusammenwirkt.

19. Verbindungsanordnung nach einem der vorangehenden Ansprüche, **dadurch gekennzeichnet, daß** die Spannelemente (24) aus Teilen eines entlang zweier paralleler Sekantenebenen geteilten Rings bestehen.

20. Verbindungsanordnung nach einem der vorangehenden Ansprüche, **dadurch gekennzeichnet, daß** die Dichtung (18) als Metall-O-Ring-Dichtung ausgebildet ist.

21. Verbindungsanordnung nach einem der vorangehenden Ansprüche, **dadurch gekennzeichnet, daß** das zweite Bauteil eine Hochdruckarmatur und das erste Bauteil ein Verschlußelement, insbesondere Deckelverschluß, dafür ist.

## Claims

1. Releasable connection arrangement with a non-positive and positive fit for two rotationally symmetrical components (2, 10), at a connection point especially for creating a leak-proof connection between closure elements on power plant valves, the connection arrangement comprising: a first component (2), which has a collar (4) projecting radially outwards with a first clamping surface (6) and a first bearing surface (8), a socket (12) disposed at an open end of a second component (10) for retaining the collar (4) by gripping round it axially, a second bearing surface (14) formed in the socket (12) to cooperate with the first bearing surface (8), a groove (16) formed either in the first or in the second bearing surface (8, 14) to receive a seal (18), a second clamping surface (22) formed in the socket (12) at an axial distance from the second bearing surface (14) with a number of ring wedge-shaped tensioning members (24), which are distributed over the circumference and are disposed such that first wedge surfaces (26) abut the first clamping surface (6) and second wedge surfaces (28) abut the second clamping surface (22), an expanding ring (34), which with an outer expanding surface (32) abuts third wedge surfaces (30) of the tensioning members (24), as well as tensioning means (40) acting between the expanding ring (34) and one of the components (2, 10), with which the expanding ring (34) can be moved axially and the tensioning members (24) can be moved radially or radially/axially, **characterized in that** a retaining ring (100) is releasably mounted on the first component (2), especially on the collar (4), adjacent to the first clamping surface (6), said retaining ring having a retaining surface (104) running substantially axis-cylindrically and abutting a locking surface (106) running substantially axis-cylindrically of the tensioning members (24), wherein said retaining ring prevents the tensioning members (24) and thus the connection arrangement from being released completely when the expanding ring (34) is released.

2. Connection arrangement according to claim 1, **characterized in that** the first and the second bearing surface (8, 14) run radially.

3. Connection arrangement according to claim 1 or 2, **characterized in that** the groove (16) is formed in part of a radial portion of the first or second bearing surface (8, 14) so as to arrange the seal (18) in parallel to the bearing surface proper.

4. Connection arrangement according to any one of the above claims, **characterized in that** the first clamping surface (6) with the second clamping surface (22) includes a first wedge angle, which is matched to a cone angle of the outer expanding surface (32) in such a way that the expanding ring (34) causes self-locking bracing of the components (2, 10).

5. Connection arrangement according to any one of the above claims, **characterized in that** the first clamping surface (6) runs radially and the second clamping surface (22) runs conically.

6. Connection arrangement according to any one of claims 1 to 4, **characterized in that** the first clamping surface (6) runs conically and the second clamping surface (22) runs radially.

7. Connection arrangement according to any one of claims 1 to 4, **characterized in that** the first and second clamping surfaces (6, 22) run conically.

8. Connection arrangement according to any one of the above claims, **characterized in that** the expanding ring (34) is continuously formed in the circumferential direction.

9. Connection arrangement according to any one of claims 1 to 7, **characterized in that** the expanding ring (34) has radial expansion slots (70) arranged spread out in the circumferential direction and a conically formed inner expanding surface (74), with which it abuts a correspondingly conically formed third expanding surface (76) disposed on the first component (2) and can be radially expanded by axial displacement.

10. Connection arrangement according to claim 9, **characterized in that** the outer expanding surface (32) and the third wedge surfaces (30) of the tensioning members (34) are in each case formed either axis-cylindrically or conically.

11. Connection arrangement according to claim 9 or 10, **characterized in that** the expansion slots (70) do not extend over an entire axial length of the expanding ring (24).

12. Connection arrangement according to claim 11, **characterized in that** the expanding ring (34) is provided with expansion slots (70) arranged in an alternating way in the circumferential direction, in the manner of a collet.

13. Connection arrangement according to any one of claims 1 to 7, 9 or 10, **characterized in that** the expanding ring (34) is formed from separate expanding members spread out over the circumference, and a thrust collar (72) gripping round them.

14. Connection arrangement according to any one of the above claims, **characterized in that** the tensioning means are formed as straining screws (40) distributed over the circumference.

15. Connection arrangement according to claim 14, **characterized in that** the straining screws (40) are located in a straining ring (44), secured axially to the first component (2), especially by means of a circumferential groove (46) and a sliding block (48).

16. Connection arrangement according to claim 14, **characterized in that** the straining screws (40) engage through the expanding ring (34) into the first component (2), especially into the collar (4).

17. Connection arrangement according to claim 14, **characterized in that** the expanding ring (34) has a flange ring (80) formed integrally with it or resting on this, through which the straining screws (40) engage into the second component (10).

18. Connection arrangement according to any one of claims 1 to 13, **characterized in that** the tensioning means are formed by a thread nut (90) acting on the expanding ring (34) and cooperating with an external or internal thread (92) of the first or second component (2, 10).

19. Connection arrangement according to any one of the above claims, **characterized in that** the tensioning members (24) consist of parts of a ring divided along two parallel secant planes.

20. Connection arrangement according to any one of the above claims, **characterized in that** the seal (18) is formed as a metal O-ring seal.

21. Connection arrangement according to any one of the above claims, **characterized in that** the second component is a high pressure valve and the first component is a closure element, especially a cover lock, for this.

## Revendications

1. Agencement d'un assemblage démontable avec une liaison positive et non positive pour deux composants symétriques en rotation (2, 10) à un point de connexion en particulier pour créer une connexion antifuite entre des éléments de fermeture sur les soupapes d'une centrale énergétique, l'agencement de l'assemblage comprenant : un premier composant (2) qui possède une collerette (4) se projetant radialement vers l'extérieur avec une première surface de serrage (6) et une première surface porteuse (8), une douille (12) disposée à une extrémité ouverte d'un deuxième composant (10) pour retenir la collerette (4) en s'agrippant axialement autour d'elle, une deuxième surface porteuse (14) formée dans la douille (12) pour coopérer avec la première surface porteuse (8), une rainure (16) formée dans la première ou dans la deuxième surface porteuse (8, 14) pour recevoir une étanchéité (18), une deuxième surface de serrage (22) formée dans la douille (12) à une distance axiale de la deuxième surface porteuse (14) avec un certain nombre d'éléments de contrainte en forme de cale (24) qui sont répartis sur la périmétrie et qui sont disposés de façon telle que les premières surfaces de cales (26) viennent en butée avec la première surface de serrage (6) et les deuxièmes surfaces de cales (28) viennent en butée avec la deuxième surface de serrage (22), une bague d'extension (34) qui avec une surface d'extension extérieure (32) vient en butée avec des troisièmes surfaces de cales (30) des éléments de contrainte (24), ainsi qu'avec les moyens de contrainte (40) agissant entre les bagues d'extension (34) et l'un des composants (2, 10), avec lesquels les bagues d'extension (34) peuvent être déplacées axialement et les éléments de contrainte (24) peuvent être déplacés radialement ou radialement/axialement, **caractérisé en ce qu'**une bague de retenue (100) est montée de façon démontable sur le premier composant (2), en particulièrement sur la collerette (4) adjacente à la première surface de serrage (6), ladite bague de retenue ayant une surface de retenue (104) s'étendant sensiblement cylindriquement à l'axe et venant en butée avec une surface de verrouillage (106) s'étendant sensiblement cylindriquement à l'axe des éléments de contrainte (24), dans lequel ladite bague de retenue empêche les éléments de contrainte (24) et ainsi l'agencement d'assemblage d'être démonté complètement lorsque la bague d'extension (34) est libérée.

2. Agencement d'assemblage selon la revendication 1, **caractérisé en ce que** la première et la deuxième surface porteuse (8, 14) s'étendent radialement.

3. Agencement d'assemblage selon la revendication 1 ou 2, **caractérisé en ce que** la rainure (16) est formée dans une partie d'une portion radiale de la première ou de la deuxième surface porteuse (8, 14) de manière à agencer l'étanchéité (18) en parallèle à la surface porteuse proprement dite.

4. Agencement d'assemblage selon l'une quelconque des revendications précédentes, **caractérisé en ce que** la première surface de serrage (6) avec la deuxième surface de serrage (22) comprend un premier angle de cale qui correspond à un angle conique de la surface d'extension extérieure (32) de telle façon que la bague d'extension (34) cause un contreventement auto-verrouillant des composants (2, 10).

5. Agencement d'assemblage selon l'une quelconque des revendications précédentes, **caractérisé en ce que** la première surface de serrage (6) s'étend radialement et la deuxième surface de serrage (22) s'étend conique.

6. Agencement d'assemblage selon l'une quelconque des revendications 1 à 4, **caractérisé en ce que** la première surface de serrage (6) s'étend conique et la deuxième surface de serrage (22) s'étend radialement.

7. Agencement d'assemblage selon l'une quelconque des revendications 1 à 4, **caractérisé en ce que** les première et deuxième surfaces de serrage (6, 22) s'étendent coniques.

8. Agencement d'assemblage selon l'une quelconque des revendications précédentes, **caractérisé en ce que** la bague d'extension (34) est continuellement formée dans la direction périphérique.

9. Agencement d'assemblage selon l'une quelconque des revendications 1 à 7, **caractérisé en ce que** la bague d'extension (34) possède des fentes d'extension radiale (70) disposées étalées dans la direction périphérique et une surface d'extension intérieure de forme conique (74) avec laquelle elle vient en butée avec une troisième surface d'extension (76) de forme conique correspondante disposée sur le premier composant (2) et qui peut être radialement étendue par déplacement axial.

10. Agencement d'assemblage selon la revendication 9, **caractérisé en ce que** la surface d'extension extérieure (32) et les troisièmes surfaces de cales (30) des éléments de contrainte (24) sont dans chaque cas formées soit cylindriquement à l'axe, soit coniques.

11. Agencement d'assemblage selon la revendication 9 ou 10, **caractérisé en ce que** les fentes d'extension (70) ne s'étendent pas sur la totalité de la longueur axiale de la bague d'extension (34).

12. Agencement d'assemblage selon la revendication 11, **caractérisé en ce que** la bague d'extension (34) est pourvue de fentes d'extension (70) disposées de façon alternée dans la direction périphérique, à la manière d'un collet.

13. Agencement d'assemblage selon l'une quelconque des revendications 1 à 7, 9 ou 10, **caractérisé en ce que** la bague d'extension (34) est formée d'éléments d'extension séparés étalés sur le périmètre, et d'une bague d'appui (72) s'agrippant autour d'eux.

14. Agencement d'assemblage selon l'une quelconque des revendications précédentes, **caractérisé en ce que** les moyens de contrainte sont formés comme des vis de serrage (40) réparties sur le périmètre.

15. Agencement d'assemblage selon la revendication 14, **caractérisé en ce que** les vis de serrage (40) sont localisées dans une rondelle de retenue (44) attachée axialement au premier composant (2), en particulier au moyen d'une rainure périmétrique (46) et d'un bloc coulissant (48).

16. Agencement d'assemblage selon la revendication 14, **caractérisé en ce que** les vis de serrage (40) s'engagent à travers la bague d'extension (34) dans le premier composant (2), en particulier dans la collerette (4).

17. Agencement d'assemblage selon la revendication 14, **caractérisé en ce que** la bague d'extension (34) est dotée d'une bague d'épaulement (80) formée intégralement avec elle ou reposant sur elle, à travers laquelle les vis de serrage (40) s'engagent dans le deuxième composant (10).

18. Agencement d'assemblage selon l'une quelconque des revendications 1 à 13, **caractérisé en ce que** les moyens de contrainte sont formés d'un écrou fileté (90) agissant sur la bague d'extension (34) et coopérant avec un filetage externe ou interne (92) du premier ou du deuxième composant (2, 10).

19. Agencement d'assemblage selon l'une quelconque des revendications précitées, **caractérisé en ce que** les éléments de contrainte (24) consistent en parties d'une bague divisée le long de deux plans sécants.

20. Agencement d'assemblage selon l'une quelconque des revendications précédentes, **caractérisé en ce que** l'étanchéité (18) est formée d'un joint torique.

21. Agencement d'assemblage selon l'une quelconque des revendications précédentes, **caractérisé en ce que** le deuxième composant est une soupape à haute pression et le premier composant est un élément de fermeture, plus spécifiquement un verrouillage de couvercle, prévu à cet effet.
